# EUROPEAN PATENT SPECIFICATION

(11) **EP 4 306 701 B1**
(45) Date of publication and mention of the grant of the patent: **13.11.2024**
(21) Application number: 23185130.4
(22) Date of filing: 12.07.2023
(51) Int. Cl.: D04H 1/541, D04H 1/435, D04H 1/732, B32B 5/02, B32B 5/08, B32B 5/26, B65D 81/02

(54) **USE OF A CUSHIONING MATERIAL FOR PACKING ARTICLES**
VERWENDUG VON EINEM POLSTERMATERIAL ZUM VERPACKEN VON ARTIKELN
MATÉRIAU DE REMBOURRAGE ADAPTÉ À L'EMBALLAGE D'ARTICLES

(30) Priority: 12.07.2022 JP 2022111579
(43) Date of publication of application: 17.01.2024
(73) Proprietor: Seiko Epson Corporation, Tokyo 160-8801 (JP)
(72) Inventor: OTA, Tsukasa, Suwa-shi, 392-8502 (JP)
(74) Representative: Lewis Silkin LLP

(56) References cited:
- WO-A1-2007/070064
- WO-A1-2007/107906
- US-A1- 2018 274 143
- US-A1- 2020 299 879

## Description

### BACKGROUND

### 1. Technical Field

The present disclosure relates to a use of a material as a cushioning material.

### 2. Related Art

Cushioning materials in which cellulose fibers obtained from waste paper or the like are bound by a binder having a granular form and subjected to molding have been researched. For example, JP-A-2020-153037 discloses a web structure including a plurality of cellulose fibers and a binder for binding the cellulose fibers. A melting rate of the binder on the surface of the web structure is higher than a melting rate of the binder at the center of the web structure in the thickness direction.

However, regarding the structure disclosed in JP-A-2020-153037, since the binder has a granular form, the binder is mainly responsible for maintaining the shape of the structure. Consequently, for example, when the structure is used as a cushioning material, although the binder contributes to improving the performance of maintaining the shape of the structure, it is possible that the binder does not contribute sufficiently to improving performance such as impact-cushioning performance. Accordingly, it is desirable to provide a cushioning material that sufficiently brings out the performance of the binder and that has excellent shape stability and impact-cushioning performance.

US 2018/274143 discloses a nonwoven recyclable fabric formed from 100% polyester. The polyester fibers forming the fabric are obtained from a mixture of monocomponent high melt polyester fibers and bicomponent high/low melt polyester fibers. The bicomponent fibers have a high melt polyester core, and a low melt polyester outer sheath. The fibers are hydroentangled with one another. After entanglement, the low melt outer sheaths are melted to form a low melt binder interspersed with the high melt polyester fibers and the remaining high melt polyester cores.

WO 2007/070064 and WO 2007/107906 are also relevant.

### SUMMARY

According to the invention, there is provided a use of a material as a cushioning material for packing articles as defined in claim 1.

### BRIEF DESCRIPTION OF THE DRAWINGS

FIG. 1 is a schematic diagram illustrating a sheet producing apparatus for producing a cushioning material according to the present embodiment.
FIG. 2 is a diagram illustrating examples of stress-strain curves of cushioning materials according to an example and a comparative example.
FIG. 3 is a graph illustrating a relationship between the heating temperature and the cushioning performance during production of a cushioning material according to an example.

### DESCRIPTION OF EXEMPLARY EMBODIMENTS

Embodiments according to the present disclosure will be described below. The embodiments described below explain examples of the present disclosure.

### 1. Cushioning material

A cushioning material according to the present embodiment includes a first fiber and a second fiber. The cushioning material can be used for packing articles, for example, precision instruments, tools, glass appliances, and pottery, so as to prevent or suppress articles from being broken or damaged during transportation and the like.

### 1.1. First fiber

The cushioning material includes a first fiber, and a plurality of first fibers are bound by a second fiber. In the cushioning material, binding may be performed on a single first fiber or binding may be performed between two or more first fibers.

There is no particular limitation regarding the first fiber, and a wide range of fiber materials can be used. Examples of the fiber include natural fiber (animal fiber and plant fiber) and chemical fiber (organic fiber, inorganic fiber, and organic-inorganic composite fiber). More specific examples of the fiber include cellulose, silk, wool, cotton, hemp, kenaf, flax, ramie, jute, Manila hemp, sisal, fibers composed of hardwood, softwood, and the like, and fibers composed of rayon, Lyocell, cuprammonium rayon, vinylon, acryl, nylon, aramid, polyester, polyethylene, polypropylene, polyurethane, polyimide, carbon, glass, or metal. These may be used alone or in combination. In addition, a regenerated fiber subjected to wet disaggregation, dry defibration, refining, and the like may be used. Of these, a cellulose fiber may be included in the first fiber.

The cellulose fiber is a regenerable natural raw material and is advantageous among various fibers from the viewpoint of production cost reduction, stable production, environmental load reduction, and the like due to a low price and ease of availability. In this regard, the cellulose fiber has to contain mainly cellulose serving as a compound having a fiber-like form and may contain hemicellulose and lignin in addition to cellulose.

An average length of the first fiber is preferably 0.05 mm or more and 5.0 mm or less, more preferably 0.1 mm or more and 3.0 mm or less, and further preferably 0.5 mm or more and 1.0 mm or less. An average width of the fiber is preferably 0.05 µm or more and 200.0 µm or less and more preferably 1.0 µm or more and 100.0 µm or less. An aspect ratio of the fiber, that is, the ratio of the average length to the average width, is preferably 10 or more and 1,000 or less and more preferably 15 or more and 500 or less. The fiber being within such a range enables the shape stability and the stiffness of the cushioning material to become favorable and enables the dynamic cushioning characteristics of the cushioning material to be improved.

The thickness and the length of the fiber can be measured by using Fiber Tester (produced by Lorentzen & Wettre).

### 1.2. Second fiber

The cushioning material includes a second fiber. The second fiber has a core portion and a cover layer covering the core portion. In addition, the second fiber contains a polyester.

The second fiber has a core portion and a cover layer covering the core portion. The core portion has a function of enhancing the stiffness of the second fiber and enhancing the structural stability of the cushioning material. The cover layer has a function of melt-bonding a plurality of first fibers, the first fiber and the second fiber, and a plurality of second fibers. That is, the cover layer functions as a binder for melt-bonding a plurality of first fibers.

In the cushioning material, the first fiber and the second fiber take on a state of being partly melt-bonded to each other. The first fiber and the second fiber are optionally oriented; they may be oriented in a specific direction or may be randomly oriented. In this regard, for example, when the cushioning material has a sheet-like shape, the first fiber and the second fiber may be oriented along the sheet surface.

In a portion in which the first fiber is in contact with the second fiber, the cover layer of the second fiber is melted by heat, extends to the outer surface of the first fiber, and is cured as is so as to bond the first fiber to the second fiber. In this regard, in a portion in which the second fibers are in contact with each other, the respective cover layers are melted by heat, extend to the surface of the other fiber, and are cured as is so that the second fibers are bonded to each other.

Consequently, since the first fiber and the second fiber are partly bonded to each other by thermal melt-bonding, when the entire cushioning material is considered, sufficient stiffness is ensured, and cushioning capability and impact absorbency can be provided.

The second fiber has a so-called core-sheath structure composed of a core portion and a cover layer. Consequently, the cover layer functions as a binder for melt-bonding the first fiber and the second fiber so that melting and excessive deformation of the core portion during thermal melt-bonding can be suppressed from occurring. That is, the core portion remaining even after molding while satisfactorily having a fiber form enables so-called sturdiness to be conferred to the second fiber. As a result, when the entire cushioning material is considered, since the number of fibers for maintaining the structure is a total of the number of the first fibers and the number of the second fibers, higher stiffness can be exerted compared with an instance of a binder having a granular form being used.

The second fiber may satisfy Tm2 < Tm1, where a melting point of the core portion is denoted as Tm1, and a melting point of the cover layer is denoted as Tm2. Consequently, in the thermal melt-bonding step, the cover layer can be more effectively preferentially melted, and the core portion can be suppressed from being melted. In addition, according to the above, the first fiber can be more readily bound by the cover layer, and the cushioning performance can be improved.

Further, the second fiber may satisfy 20°C ≤ (Tm1 - Tm2). Consequently, in the thermal melt-bonding step, the cover layer can be more reliably preferentially melted, and the core portion can be further suppressed from being melted. In addition, according to the above, the cushioning performance can be further improved since the fiber can be bound at a higher temperature.

In more detail, the second fiber may satisfy 20°C ≤ (Tm1- Tm2) ≤ 100°C and, in particular, may satisfy 25°C ≤ (Tm1 - Tm2) ≤ 90°C. When the value of (Tm1 - Tm2) is excessively small, in the thermal melt-bonding step, there is an increased possibility that the core portion will be melted and deformed, and there is a possibility that a relatively high heating temperature will be required for melting the cover layer. On the other hand, when the value of (Tm1 - Tm2) is excessively large, there is a possibility that selecting a material for forming such a cover layer will be difficult.

In this regard, the second fiber may satisfy 160°C ≤ Tm1. Consequently, 20°C ≤ (Tm1 - Tm2) can be readily satisfied.

Further, the second fiber may satisfy 160°C ≤ Tm1 ≤ 200°C and, in particular, may satisfy 165°C ≤ Tm1 ≤ 190°C. When the value of Tm1 is excessively low, in the thermal melt-bonding step, there is an increased possibility that the core portion will be melted and deformed. On the other hand, when the value of Tm1 is excessively high, there is a possibility that selecting a material for forming such a cover layer will be difficult.

In addition, the second fiber may satisfy 120°C ≤ Tm2. Consequently, 20°C ≤ (Tm1 - Tm2) can be readily satisfied.

In more detail, the second fiber may satisfy 120°C ≤ Tm2 ≤ 170°C and, in particular, may satisfy 125°C ≤ Tm2 ≤ 160°C. When the value of Tm2 is excessively low, there is a possibility that selecting a material for forming such a cover layer will be difficult. On the other hand, when the value of Tm2 is excessively high, in the thermal melt-bonding step, there is an increased possibility that the core portion will be melted and deformed.

Such a difference in the melting point can be realized by, for example, selecting the materials for forming the core portion and the cover layer. In this regard, the melting point in the present specification is a value determined in conformity with JIS K 0064-1192.

The second fiber includes a polyester. There is no particular limitation regarding the polyester provided that an ester bond is included in the molecule, and examples include aromatic polyesters, such as polyethylene terephthalates (PET), polybutylene terephthalates, and polypropylene terephthalates, and aliphatic polyesters, such as polylactic acids, polybutylene succinates, and polycaprolactones.

In this regard, the polyester may be copolymerized with another dicarboxylic acid component, diol component, oxycarboxylic acid component, or the like, or a blend material in which a plurality of types of polyesters are blended may be used. Examples of other copolymerizable components include dicarboxylic acids, such as isophthalic acid, naphthalenedicarboxylic acid, sodium 5-sulfoisophthalate, phthalic anhydride, sebacic acid, adipic acid, azelaic acid, succinic acid, and ε-caprolactone, and diol components, such as ethanediol, diethylene glycol, propanediol, 1,4-butanediol, 1,5-pentanediol, neopentyl glycol, 1,6-hexanediol, cyclohexane glycol, and cyclohexanedimethanol.

The second fiber containing the polyester enables the so-called sturdiness of the second fiber to become more favorable. The core portion of the second fiber may contain the polyester, and, in particular, the core portion may be composed of the polyester. Further, when the core portion is composed of the polyester, the polyester may be a polyethylene terephthalate or a polylactic acid and, in particular, a polyethylene terephthalate. In this regard, the cover layer of the second fiber may also contain the polyester.

There is no particular limitation regarding the material for forming the cover layer provided that the material can cover the core portion and can be thermally melt-bonded to the first fiber. Examples of such a material include thermoplastic resins, such as polypropylenes, polyethylenes, polyvinyl chlorides, polystyrenes, polyacrylic resins, polyesters, polyphenylene ethers, and polyamides. These resins may be used alone or in an appropriate combination. In addition, the resins may be copolymerized materials or modified materials.

When the material for forming the core portion is a polyethylene terephthalate, the material for forming the core portion may be a polyolefin such as a polyethylene or a polypropylene and, in particular, may be a polyethylene.

In this regard, the above-described relationship between the melting point of the core portion and the melting point of the cover layer may be adjusted by appropriately selecting the respective materials for forming the core portion and the cover layer.

There is no particular limitation regarding the ratio of the width W1 of the cover layer to the diameter D1 of the core portion, and the ratio is preferably 0.2 or more and 2.0 or less and more preferably 0.5 or more and 1.5 or less. Consequently, the core portion after the thermal melt-bonding step can be more reliably made to not readily deform.

There is no particular limitation regarding the average length of the second fiber, and the length is preferably 0.5 mm or more and 10 mm or less and more preferably 3.0 mm or more and 5 mm or less. Consequently, a part melt-bonded to the first fiber and a part melt-bonded to another second fiber can be sufficiently ensured. As a result, the strength of the cushioning material can be enhanced.

In addition, there is no particular limitation regarding the average width (thickness) of the second fiber, and the width is preferably 0.5 µm or more and 50 µm or less and more preferably 0.7 µm or more and 40 µm or less. Consequently, sufficient strength can be ensured.

In this regard, an average aspect ratio of the second fiber, that is, the ratio of the average length to the average width, is preferably 3 or more and 1,500 or less and more preferably 10 or more and 800 or less.

The average length of the first fiber may be the same as or different from the average length of the second fiber. Specifically, LA/LB is preferably 0.2 or more and 5.0 or less and more preferably 0.5 or more and 2.0 or less, where the average length of the first fiber is denoted as LA, and the average length of the second fiber is denoted as LB. Consequently, variations in the mechanical strength and the impact absorbency of the entire cushioning material can be reduced.

In addition, for the same reason, the average width of the first fiber may be the same as or different from the average width of the second fiber. Specifically, WA/WB is preferably 0.7 or more and 1.3 or less and more preferably 0.8 or more and 1.2 or less, where the average width of the first fiber is denoted as WA, and the average length of the second fiber is denoted as WB. 1.3. Amounts of first fiber and second fiber mixed

There is no particular limitation regarding the amounts of the first fiber and the second fiber, and the second fiber is preferably 5% by mass or more and 50% by mass or less, more preferably 10% by mass or more and 45% by mass or less, and further preferably 20% by mass or more and 40% by mass or less, where the total mass of the cushioning material is assumed to be 100%. The amount of the second fiber mixed being within such a range enables the stiffness and the cushioning capability of the cushioning material to become more excellent.

### 1.4. Other features

There is no particular limitation regarding the thickness of the cushioning material. For example, the thickness can be 1.0 mm or more and 200.0 mm or less and may be 5.0 mm or more and 150.0 mm or less.

In addition, there is no particular limitation regarding the basis weight of the cushioning material, and the basis weight can be set to be, for example, 50 g/m² or more and 10,000 g/m² or less. Further, the bulk density of the cushioning material can also be appropriately set in accordance with application.

Further, the cushioning material may include, for example, an optional sheet or nonwoven fabric on the surface or in the interior for the purpose of enhancing convenience in molding and working.

In this regard, the cushioning material may contain an additive other than the first fiber and the second fiber. Examples of the additive include antimicrobial agents, antiviral agents, fungicides, deodorizers, neutralizers, fixing agents, mucilaginous agents, sizing agents, paper strength additives, antifoaming agents, water-retention agents, water-resistant additives, aggregation inhibitors for suppressing the fiber from aggregating and suppressing the resin from aggregating, carbon black, coloring agents, and flame retardants.

### 1.5. Operations, advantages, and the like

The cushioning material according to the present embodiment uses the second fiber as a binder of the first fiber. Since the second fiber has a fiber-like form, the amount of the fiber for supporting a load increases compared with when a binder having a granular form is used. Consequently, the modulus of elasticity is high in an elastic region in which the strain is low and the sinking resistance of the cushioning material is favorable. In addition, in a plastic region in which the strain is high, the acceleration is low, and the cushioning performance of the cushioning material is favorable. It is conjectured that a cause of such advantages is an increase in bonding points between the binder and the fiber and/or the high bonding strength of the bonding point.

### 2. Method for producing cushioning material

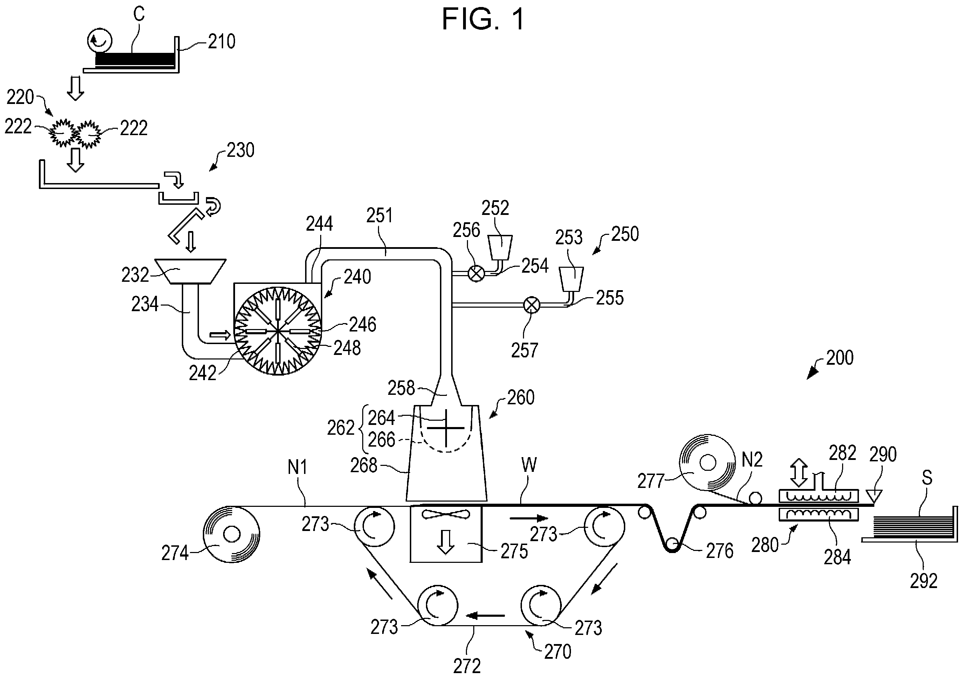

Next, a method for producing the cushioning material according to the present embodiment will be described with reference to the drawings. The cushioning material according to the present embodiment is produced by, for example, using a sheet producing apparatus. FIG. 1 is a schematic diagram illustrating a sheet producing apparatus 200 for producing the cushioning material according to the present embodiment.

In the sheet producing apparatus 200 described here as an example, a fiber containing a cellulose fiber obtained from a raw material C corresponds to the above-described first fiber, and a binder mixed in a mixing portion 250 corresponds to the above-described second fiber. In this regard, a produced sheet S corresponds to the above-described cushioning material.

As illustrated in FIG. 1, the sheet producing apparatus 200 includes, for example, a supply portion 210, a coarse crushing portion 220, a fixed quantity supply portion 230, a defibration portion 240, a mixing portion 250, a forming portion 260, a web transportation portion 270, a molding portion 280, and a cutting portion 290 in this order from the upstream position toward the downstream position. The sheet producing apparatus 200 produces a sheet S that is a sheet-like molded body.

The supply portion 210 supplies the raw material C to the coarse crushing portion 220. The supply portion 210 includes an automatic feeding mechanism. The supply portion 210 continuously and automatically introduces the raw material C into the coarse crushing portion 220 by using the automatic feeding mechanism. The raw material C is a material containing a cellulose fiber.

The coarse crushing portion 220 cuts, in a gas such as air, the raw material C supplied from the supply portion 210. The coarse crushing portion 220 has a coarse crushing blade 222. The coarse crushing portion 220 is, for example, a shredder, a cutter mill, or the like. The raw material C is shredded by the coarse crushing blade 222 into strips. The shape of the strip in plan view is, for example, a few millimeters square or an indefinite shape. The strips are collected into the fixed quantity supply portion 230.

The fixed quantity supply portion 230 counts the strips and supplies a fixed quantity to a hopper 232. The fixed quantity supply portion 230 is, for example, a vibrating feeder. The strips supplied to the hopper 232 are transported to an inlet 242 of the defibration portion 240 through a pipe 234.

The defibration portion 240 has, for example, the inlet 242, an outlet 244, a stator 246, a rotor 248, and a gas-stream-generating mechanism not illustrated in FIG. 1. The defibration portion 240 dry-defibrates strips of the raw material C so as to form fibers. The strips of the raw material C are introduced into the defibration portion 240 through the inlet 242 by a gas stream generated by the gas-stream-generating mechanism. In this regard, "dry" denotes that predetermined treatment is performed in a gas such as air rather than in a liquid.

The stator 246 has a substantially cylindrical inner side surface. The rotor 248 rotates along the inner side surface of the stator 246. The strips of the raw material C are pinched between the stator 246 and the rotor 248 and are defibrated by a shear force generated between the stator 246 and the rotor 248.

The fiber formed by defibration in the defibration portion 240 may have a fiber length of 1.0 mm or more. Consequently, since the fiber is not excessively shortened, the mechanical strength of the sheet S is enhanced. The fiber is discharged from the outlet 244 of the defibration portion 240 to the mixing portion 250. A pipe 251 of the mixing portion 250 is in communication with the interior of the defibration portion 240 and the interior of the forming portion 260. The fiber is transported from the defibration portion 240 to the forming portion 260 through the pipe 251 by a gas stream generated by the gas-stream-generating mechanism.

The mixing portion 250 includes, for example, the pipe 251, hoppers 252 and 253, supply pipes 254 and 255, and valves 256 and 257. The mixing portion 250 mixes a binder and, as the situation demands, an additive with the fiber transported in the air in the pipe 251. Consequently, a mixture is formed.

The hopper 252 supplies the binder into the pipe 251. The hopper 252 is in communication with the interior of the pipe 251 through the supply pipe 254. The valve 256 is disposed in the supply pipe 254 between the hopper 252 and the pipe 251. The valve 256 adjusts the weight of the binder supplied from the hopper 252 to the pipe 251. The mixing ratio of the fiber to the binder is adjusted by the valve 256. The binder may be supplied in a powder state or a melted state.

The hopper 253 supplies an additive into the pipe 251. The hopper 253 is in communication with the interior of the pipe 251 through the supply pipe 255. The valve 257 is disposed in the supply pipe 255 between the hopper 253 and the pipe 251. The valve 257 adjusts the weight of the binder supplied from the hopper 253 to the pipe 251. The mixing ratio of the additive to the fiber and the binder is adjusted by the valve 257.

The fiber, the binder, and the like are mixed while being transported in the pipe 251 to the forming portion 260 so as to become a mixture. To facilitate formation of the mixture in the pipe 251 and to improve the transportability of the mixture, a blower or the like for generating a gas stream in the pipe 251 may be disposed. The mixture is introduced into the forming portion 260 through a supply member 258 that couples the downstream end of the pipe 251 to the forming portion 260.

The forming portion 260 accumulates the mixture containing the fiber, the binder, and the like in air so as to form a web W. The forming portion 260 includes, for example, a dispersion portion 262 and an accumulation portion 268.

The dispersion portion 262 is disposed in the interior of the accumulation portion 268. The interior of the dispersion portion 262 is in communication with the pipe 251 through the supply member 258. The web transportation portion 270 is disposed under the accumulation portion 268. The forming portion 260 takes the mixture from the supply member 258 into the interior of the dispersion portion 262 and accumulates the mixture on a mesh belt 272 of the web transportation portion 270 in a dry system.

The dispersion portion 262 includes, for example, a rotation member 264 and a drum portion 266 housing the rotation member 264. Regarding an example illustrated in FIG. 1, the rotation member 264 is illustrated as a "+" symbol. The rotation member 264 is driven to rotate by a driving portion not illustrated in FIG. 1. The drum portion 266 is a substantially columnar member. The lower portion of the drum portion 266 is formed from, for example, a metal mesh. The net of the metal mesh passes the fiber, the binder, and the like contained in the mixture.

The accumulation portion 268 is a substantially box-like member. The upper surface of the accumulation portion 268 is coupled to the supply member 258. A region corresponding to the bottom surface of the accumulation portion 268 is open. The dispersion portion 262 is located in the accumulation portion 268 and opposes the upper surface of the mesh belt 272. The accumulation portion 268 is composed of, for example, a resin, a metal, or the like.

The mixture is disentangled by passing through the rotating rotation member 264 or between the rotation member 264 and the drum portion 266. A plurality of fibers in the mixture in an entangled state are disentangled and separated into individual fibers and pass through the mesh of the drum portion 266. Consequently, the fiber, the binder, and the like contained in the mixture are dispersed by the dispersion portion 262 in the interior of the accumulation portion 268.

The mixture is released from the interior of the dispersion portion 262 into the air in the accumulation portion 268 and is caused to land on the mesh belt 272 by gravity and a suction force of a suction mechanism 275 of the web transportation portion 270. The mixture is accumulated on the upper surface of the mesh belt 272 with a first base material N1 interposed therebetween. The accumulation portion 268 forms a web W by accumulating the mixture containing dispersed fibers.

The web transportation portion 270 includes, for example, the mesh belt 272, a stretching roller 273, and the suction mechanism 275.

The mesh belt 272 is an endless belt. Regarding the example illustrated in FIG. 1, the mesh belt 272 is looped around the four stretching rollers 273. The mesh belt 272 does not interfere with suction by the suction mechanism 275 and has a strength capable of holding the web W. The mesh belt 272 is composed of, for example, a metal or a resin. There is no particular limitation regarding the opening diameter of the mesh included in the mesh belt 272, and the diameter is, for example, 60 µm or more and 125 µm or less.

The stretching rollers 273 rotatably support the mesh belt 272. At least one of the four stretching rollers 273 is driven to rotate by a motor not illustrated in FIG. 1. The upper surface of the mesh belt 272 is moved downstream by the rotation of the stretching rollers 273. Regarding the example illustrated in FIG. 1, the mesh belt 272 rotates clockwise. The first base material N1 and the web W are transported downstream by rotation of the mesh belt 272.

A base material supply portion 274 is disposed upstream of the mesh belt 272. The base material supply portion 274 rotatably supports the roll-like first base material N1. The first base material N1 is continuously supplied from the base material supply portion 274 onto the upper surface of the mesh belt 272. The mixture is dropped from the accumulation portion 268 and accumulated onto the upper surface of the first base material N1 that is transported. Consequently, the web W is continuously formed on the upper surface of the first base material N1. The mesh belt 272 transports the first base material N1 and the web W downstream. The first base material N1 is composed of a nonwoven fabric.

The suction mechanism 275 is disposed under the dispersion portion 262. The suction mechanism 275 facilitates accumulation of the mixture on the mesh belt 272. The suction mechanism 275 suctions the air in the accumulation portion 268 through a plurality of openings of the mesh belt 272 and the first base material N1. The plurality of openings of the mesh belt 272 and the first base material N1 pass the air and hardly pass the fiber, the binder, and the like contained in the mixture. The mixture released from the dispersion portion 262 to the interior of the accumulation portion 268 is suctioned downward with the air. Regarding the suction mechanism 275, a known suction apparatus such as a blower is used.

The mixture in the accumulation portion 268 is accumulated on the upper surface of the first base material N1 due to the suction force of the suction mechanism 275 in addition to gravity so as to form the web W. The web W includes a relatively large amount of air and is soft and bulged. The web W is transported downstream with the first base material N1 by the mesh belt 272.

In this regard, although not illustrated in FIG. 1, a humidifier may be disposed above the mesh belt 272. The humidifier sprays water onto the web W so as to perform humidification. Consequently, the fiber, the binder, and the like contained in the web W can be suppressed from being scattered. Further, a water-soluble additive and the like may be contained in the water used for humidification so as to impregnate the web W with the additive simultaneously with humidification.

A dancer roller 276 is disposed downstream of the web transportation portion 270. The web W is peeled off the most downstream stretching roller 273 and thereafter pulled by the dancer roller 276. The dancer roller 276 ensures a downstream working time. Specifically, molding in the molding portion 280 is a batch treatment. Therefore, the dancer roller 276 is moved vertically so as to delay the web W continuously transported from the accumulation portion 268 reaching the molding portion 280.

A base material supply portion 277 is disposed downstream of the dancer roller 276 and upstream of the molding portion 280. The base material supply portion 277 rotatably supports the roll-like second base material N2. The second base material N2 is continuously supplied from the base material supply portion 277 onto the upper surface of the web W. Consequently, the web W in the state of being pinched between the lower first base material N1 and the upper second base material N2 is supplied to the molding portion 280. The second base material N2 is composed of a nonwoven fabric.

Regarding the molding portion 280, a hot-press apparatus is used. The molding portion 280 includes an upper substrate 282 and a lower substrate 284. The molding portion 280 molds the first base material N1, the web W, and the second base material N2 into a continuous-form-like sheet S. The upper substrate 282 and the lower substrate 284 pinch the web W so as to perform pressurization and to perform heating by using an internal heater. The first base material N1 and the second base material N2 can suppress the fiber contained in the web W from adhering to the molding portion 280.

The web W is compressed from above and from below by pressurization, and the density is increased. The binder contained in the web W is melted by heating and wet-spreads between fibers. When heating is finished in such a state and the binder is solidified, the fibers are bound to each other by the binder. Consequently, the continuous-form-like sheet S composed of three layers of the first base material N1, the web W, and the second base material N2 is molded. The continuous-form-like sheet S is transported to the downstream cutting portion 290.

In this regard, in the molding portion 280, continuous molding may be performed by using a heating roller and a pressing roller instead of the hot-press apparatus. In such an instance, the dancer roller 276 may be skipped.

The cutting portion 290 cuts the continuous-form-like sheet S into a cut-sheet-like shape. Although not illustrated in FIG. 1, the cutting portion 290 has a vertical blade and a horizontal blade. The vertical blade and the horizontal blade are each, for example, a rotary cutter. In this regard, an ultrasonic cutter or the like may be used instead of a rotary cutter. The vertical blade cuts the continuous-form-like sheet S in the moving direction. The horizontal blade cuts the continuous-form-like sheet S in the direction intersecting the moving direction. Consequently, the sheet S is worked into a substantially rectangular cut-sheet-like shape and stored in a tray 292.

The sheet S produced by the sheet producing apparatus 200 can be molded so as to have a predetermined thickness and strength by changing the thickness of the web W formed in the accumulation portion 268, changing the thickness by stacking a plurality of webs W, changing the degree of pressurization and heating in the molding portion 280, and the like. Regarding the example illustrated in FIG. 1, the second fiber is added in the mixing portion 250, but the second fiber may be mixed upstream of the mixing portion 250.

The degree of pressurization and heating in the molding portion 280 may be appropriately set in accordance with the characteristics of the sheet S to be produced, and heating in the molding portion 280 is set so that the temperature of the web W is preferably 160°C or higher and 230°C or lower and more preferably 200°C or higher and 220°C or lower. As demonstrated in the example later, when the second fiber in which the core portion is PET and the cover layer is a polyethylene is used, heating in the molding portion 280 may be performed to ensure compatibility between the sinking resistance and the impact-cushioning capability of the cushioning material since the temperature of the web W is within the above-described range.

In this regard, in the above-described example, a nonwoven fabric is used as the first base material N1 and the second base material N2 but is not limited to being used. When the webs W are stacked, the nonwoven fabric may be arranged as only the uppermost surface and the lowermost surface.

When the produced sheet S (cushioning material) is molded by the hot-press apparatus, the heating and pressing roller, or the like, the first fiber and the second fiber are oriented in a direction parallel to the main surface of the sheet S. That is, when the first fiber and the second fiber are stacked and/or when the web W is molded, the longitudinal directions of the fibers are readily uniformized in a direction parallel to the main surface of the sheet S, and the fibers do not readily stand straight in a direction normal to the sheet S. Therefore, the mechanical characteristics of the cushioning material have anisotropy.

Regarding the cushioning material, the anisotropy of the mechanical characteristics of the cushioning material can be exploited by appropriately changing the direction of the cushioning material during use in accordance with application. For example, to obtain more favorable sinking resistance and impact-cushioning capability, the cushioning material can be molded and worked so that the load support direction is in accord with the fiber orientation direction and be used.

### 3. Experimental example

The present disclosure will be further described below with reference to experimental examples, but the present disclosure is not limited to the following examples.

### 3.1. Evaluation of sinking resistance

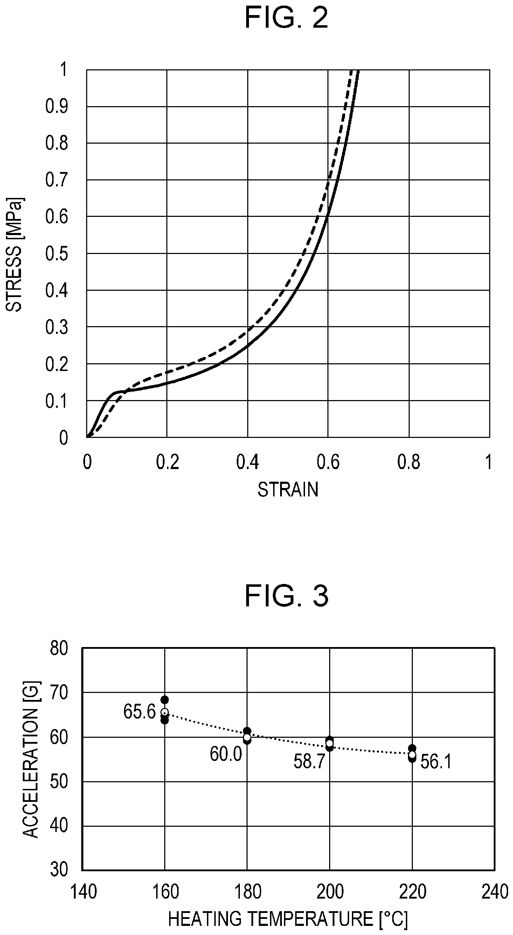

FIG. 2 is a graph illustrating stress-strain curves of the results of measuring a cushioning material produced by molding a mixture of the first fiber and the second fiber (example) and a cushioning material produced by molding a mixture of the first fiber and a binder having a granular form (comparative example). On the graph, the solid line represents the example, and the broken line represents the comparative example.

Regarding the first fiber, pulp was used. Regarding the second fiber, a fiber having a core-sheath structure in which a polyethylene terephthalate was used as a core portion and in which a polyethylene was used as a cover layer was used. A sample was molded by using an apparatus analogous to the above-described sheet producing apparatus.

The stress-strain relationship was measured while the first fiber was arranged parallel to the compression direction. On the graph, the amount of strain was normalized, where a point at which the thickness of the sample was 0 (zero) was assumed to be 1 (100%).

FIG. 2 revealed that slopes of the curves differ from each other in a region in which strain is low. Specifically, regarding the example, in a region in which strain is substantially 0.1 or less, the slope of the curve is steeper than that of the comparative example, and the cushioning material of the example exhibits a higher modulus of elasticity (stiffness). Accordingly, it is illustrated that the cushioning material of the example has higher stiffness in an elastic region in which strain is low, and it is indicated that the sinking resistance with respect to a load is high. It is conjectured that a cause of this is the second fiber (binder) having a fiber-like form and the second fiber thereby serving as a portion of a structure for supporting the load so as to increase the amount of the fiber for supporting the load. On the other hand, regarding the comparative example in which the binder has a granular form, it is conjectured that the cushioning material has low stiffness in the elastic region and that the sinking resistance with respect to the load is low.

### 3.2. Evaluation of cushioning capability

FIG. 3 is a graph illustrating the results of acceleration tests of some cushioning materials molded by changing the molding temperature (heating temperature) of a mixture of the first fiber and the second fiber. The horizontal axis of the plot represents the molding temperature, and the vertical axis represents the measured acceleration. Three samples (n = 3) were measured on a heating temperature basis, and an average value was presented on the graph.

Regarding the first fiber, pulp was used. Regarding the second fiber, a fiber having a core-sheath structure in which a polyethylene terephthalate was used as a core portion and a polyethylene was used as a cover layer was used. A sample was molded by using an apparatus analogous to the above-described sheet producing apparatus. The heating temperature in the molding portion was as presented on the graph.

The Pull-down Drop Shock Testing system (PDST) produced by SHINYEI Technology Co., LTD., was used, and the acceleration was read from the test result. Every sample was subjected to the measurement while the first fiber was arranged parallel to the impact application direction.

FIG. 3 revealed that the cushioning capability of the cushioning material is enhanced with increasing temperature during molding since the acceleration is decreased. It is conjectured that the cause of this is the viscosity of the cover layer in the second fiber melted during heating being decreased with increasing the heating temperature so that the molten component readily wet-spreads along the first fiber and the second fiber. It is conjectured that the molten component forms bonding points with more fibers with an increasing degree of wet-spreading so as to improve the cushioning performance.

## Claims

1. Use of a material as a cushioning material for packing articles, the material comprising:
a first fiber; and
a second fiber
having a core portion and a cover layer covering the core portion and
containing a polyester, wherein
the cover layer functions as a binder for melt-bonding a plurality of first fibers.

2. The use according to claim 1, wherein
the core portion of the second fiber is composed of PET or PLA.

3. The use according to claim 1, wherein
Tm2 < Tm1, and 20°C ≤ (Tm1 - Tm2), where a melting point of the core portion of the second fiber is denoted as Tm1, and a melting point of the cover layer is denoted as Tm2.

4. The use according to claim 1, wherein
160°C <_ Tm1, where a melting point of the core portion of the second fiber is denoted as Tm 1.

5. The use according to claim 4, wherein 120°C ≤ Tm2, where a melting point of the cover layer is denoted as Tm2.

## Patentansprüche

1. Verwendung eines Materials als ein Polstermaterial zum Verpacken von Artikeln, wobei das Material umfasst:
eine erste Faser; und
eine zweite Faser
mit einem Kernabschnitt und einer Deckschicht, die den Kernabschnitt bedeckt und einen Polyester beinhaltet, wobei
die Deckschicht als Bindemittel zum Schmelzbinden mehrerer erster Fasern dient.

2. Verwendung nach Anspruch 1, wobei
der Kernabschnitt der zweiten Faser aus PET oder PLA besteht.

3. Verwendung nach Anspruch 1, wobei
Tm2 < Tm1 und 20°C ≤ (Tm1 - Tm2), wo ein Schmelzpunkt des Kernabschnitts der zweiten Faser als Tm1 bezeichnet wird und ein Schmelzpunkt der Deckschicht als Tm2 bezeichnet wird.

4. Verwendung nach Anspruch 1, wobei
160°C ≤ Tm1, wo ein Schmelzpunkt des Kernabschnitts der zweiten Faser als Tm1 bezeichnet wird.

5. Verwendung nach Anspruch 4, wobei 120°C ≤ Tm2, wo ein Schmelzpunkt der Deckschicht als Tm2 bezeichnet wird.

## Revendications

1. Utilisation d'un matériau comme matériau de rembourrage pour l'emballage d'articles, le matériau comprenant :
une première fibre ; et
une deuxième fibre
présentant une partie de coeur et une couche de couverture recouvrant la partie de coeur et
contenant un polyester, dans laquelle
la couche de couverture fonctionne comme un liant pour la liaison par fusion d'une pluralité de premières fibres.

2. Utilisation selon la revendication 1, dans laquelle
la partie de coeur de la deuxième fibre est composée de PET ou de PLA.

3. Utilisation selon la revendication 1, dans laquelle
Tm2 < Tm1, et 20 °C ≤ (Tm1 - Tm2), où un point de fusion de la partie de coeur de la deuxième fibre est désigné par Tm1, et un point de fusion de la couche de couverture est désigné par Tm2.

4. Utilisation selon la revendication 1, dans laquelle
160 °C ≤ Tm1, où un point de fusion de la partie de coeur de la deuxième fibre est désigné par Tm1.

5. Utilisation selon la revendication 4, dans laquelle 120 °C ≤ Tm2, où un point de fusion de la couche de couverture est désigné par Tm2.
